**Europäisches Patentamt**

**European Patent Office**

**Office européen des brevets**

(19)

(11) Veröffentlichungsnummer : **0 587 633 B1**

(12)

# EUROPÄISCHE PATENTSCHRIFT

(45) Veröffentlichungstag der Patentschrift :
**20.12.95 Patentblatt 95/51**

(21) Anmeldenummer : **92911016.1**

(22) Anmeldetag : **26.05.92**

(86) Internationale Anmeldenummer :
**PCT/EP92/01183**

(87) Internationale Veröffentlichungsnummer :
**WO 92/21910 10.12.92 Gazette 92/31**

(51) Int. Cl.[6] : **F16L 59/14, B29C 44/00,
// B29K75:00**

(54) **VERFAHREN ZUR ISOLIERUNG VON ROHREN**

(30) Priorität : **05.06.91 DE 4118362**

(43) Veröffentlichungstag der Anmeldung :
**23.03.94 Patentblatt 94/12**

(45) Bekanntmachung des Hinweises auf die
Patenterteilung :
**20.12.95 Patentblatt 95/51**

(84) Benannte Vertragsstaaten :
**AT BE DE DK ES FR GB GR IT NL SE**

(56) Entgegenhaltungen :
**EP-A- 0 166 245
EP-A- 0 356 814
EP-A- 0 421 269
AU-B- 440 490**

(56) Entgegenhaltungen :
**FR-A- 2 451 261
GB-A- 1 181 672
PATENT ABSTRACTS OF JAPAN vol. 7, no.
248 (C-193) 4. November 1983 & JP-A-58 134
108 (ASAHI OORIN KK) 10. August 1983**

(73) Patentinhaber : **BAYER AG
D-51368 Leverkusen (DE)**

(72) Erfinder : **GRIMM, Wolfgang
Im Holzhausen 81
D-5090 Leverkusen 3 (DE)**
Erfinder : **EISEN, Norbert
Gerolsteiner Strasse 44
D-50937 Köln (DE)**
Erfinder : **RUPRECHT, Hans-Dieter
Pfarrer-Maybaum-Weg 27
D-5000 Köln 80 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Das Beschichten von Rohren durch Auftragen mehrerer massiver Kunststoffschichten nach dem Rotationsgießverfahren ist bekannt (vgl. EP-A 166 245).

Die vorliegende Erfindung betrifft ein Verfahren zur Isolierung von Rohren. Dabei wird bevorzugt ein speziell entwickelter Polyurethan-Hartschaumstoff als Isolierschicht und ein speziell entwickeltes massives Polyurethan - besonders bevorzugt ein elastomeres Polyurethan - als Deckschicht verwendet.

Weit verbreitet sind zur Zeit zwei Verfahren:

A: Sprühen der Hartschaumschicht und seperater Auftrag einer Deckschicht auf das rotierende Rohr.

Nachteile:

1. hohe Sprühverluste (bis 50 %)
2. mehrfache Handhabung des Rohres

B: Formausschäumung mit Außenrohr aus Polyethylen

Nachteile:

1. durch lange Fließwege ungleichmäßige Rohdichteverteilung über lange Rohre
2. Wärmebrüche durch Abstandshalter

Die vorliegende Erfindung vermeidet die vorgenannten Nachteile.

Ein weiterer Vorteil des erfindungsgemäßen Verfahrens besteht in der Flexibilität der Anwendung für verschiedene Rohrdurchmesser mit variablen Dicken der Einzelschichten. Eine Anpassung der Rezepturen der massiven Polyurethandeckschicht und des Polyurethan-Hartschaumstoffes an die jeweiligen Rohrdimension in Verbindung mit der Variation der Maschinenparameter erlaubt jede beliebige Einstellung.

Gegenstand der Erfindung ist ein Verfahren zur Isolierung von Rohren durch Auftragen von mindestens einer Isolier- und mindestens einer äußeren Deckschicht nach dem Rotationsgießverfahren, wobei als Isolierschicht ein Polyurethan-Hartschaumstoff und als Deckschicht ein massives Polyurethan verwendet werden.

Erfindungsgemäß ist vorgesehen,

- daß der Polyurethan-Hartschaumstoff durch Umsetzung eines
  a) aromatischen Polyisocyanats mit
  b) einer im Mittel mindestens 3 gegenüber Isocyanaten reaktive Wasserstoffatome aufweisenden Polyolkomponente, enthaltend
  1. einen mindestens 2 Hydroxylgruppen aufweisenden Polyether vom Molekulargewicht 300-700
  2. ein aliphatisches, cycloaliphatisches oder aromatisches Polyamin vom Molekulargewicht 32-1000 als Vernetzer und
  3. ein Treibmittel sowie
  4. gegebenenfalls einen tertiären Aminogruppen aufweisenden Polyether vom Molekulargewicht 200-700 und
  5. gegebenenfalls eine mindestens 3 Hydroxylgruppen aufweisende Verbindung vom Molekulargewicht 62-299 als Kettenverlängerungs- oder Vernetzungsmittel und
  6. gegebenenfalls Hilfs- und Zusatzstoffe,
  erhältlich ist,
- daß vorzugsweise als aromatisches Polyisocyanat ein Gemisch aus Diphenylmethandiisocyanat und Polyphenyl-polymethylen-polyisocyanaten (rohes MDI) verwendet wird,
- daß vorzugsweise Wasser als Treibmittel verwendet wird,
- daß vorzugsweise die Polyolkomponente noch zusätzlich ein Hydrophobierungsmittel enthält,
- daß das massive Polyurethan durch Umsetzung eines
  a) endständige NCO-Gruppen aufweisenden Prepolymers mit einem NCO-Gehalt von 5-20 Gew.-%, das durch Reaktion von
  1. 4,4'-Diphenylmethandiisocyanat, gegebenenfalls im Gemisch mit 2,4'- und 2,2'-Isomeren und 0-30 Gew.-% höherfunktionellen Anteilen, mit einem
  2. 2-4 OH-Gruppen aufweisenden Polyether vom Molekulargewicht 1000-6000, dem gegebenenfalls bis zu 30 Gew.-% eines Hydrophobierungsmittels, vorzugsweise Rizinusöl, zugesetzt wurde, erhältlich ist, mit
  b) einer Polyolkomponente, enthaltend
  1. einen 2-4 gegenüber Isocyanaten aktive Wasserstoffatome aufweisenden Polyether vom Molekulargewicht 1000-6000,
  2. 5-35 Gew.-% eines aromatischen Diamins vom Molekulargewicht 122-400,
  3. 0-5 Gew.-% eines aliphatischen oder cycloaliphatischen Diamins vom Molekulargewicht 60-400,
  4. 0-30 Gew.-% eines Hydrophobierungsmittels und
  5. gegebenenfalls Hilfs- und Zusatzstoffe

erhältlich ist,
- daß vorzugsweise die Polyolkomponente als aromatisches Diamin Diethyltoluylen-diamin enthält,
- daß der Auftrag der Polyurethan-Hartschaumschicht und der äußeren Schutzschicht aus massivem Polyurethan in einem Arbeitsgang erfolgt,
- daß vorzugsweise der Auftrag der äußeren Schutzschicht aus massivem Polyurethan vor Erreichen der Endfestigkeit der Polyurethan-Hartschaumschicht erfolgt und
- daß vorzugsweise der Auftrag der Polyurethan-Hartschaumschicht und der äußeren Schicht aus massivem Polyurethan mit Hilfe von Mischköpfen und Gießdüsen erfolgt, wobei der Mischkopfvorschub entweder in definiertem Abstand der Mischköpfe parallel zur Rotationsachse erfolgt oder das Rohr in achsialer Richtung unter fest positionierten Mischköpfen mit definiertem Vorschub bewegt wird.

Für die Herstellung der Polyurethan-Hartschaumstoffe werden als Ausgangskomponenten eingesetzt:

Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der

n = 2-4, vorzugsweise 2, und

Q einen aromatischen Kohlenwasserstoffrest mit 6 -15, vorzugsweise 6 - 13 C-Atomen,

bedeutet, z.B. solche Polyisocyanate, wie sie in der DEOS 28 32 253, Seiten 10-11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren (TDI), Gemische aus Diphenylmethandiisocyanat und Polyphenylpolymethylenpolyisocyanaten, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate").

Diese Polyisocyanate werden mit der näher definierten Polyolkomponente umgesetzt.

Diese enthält (zu 50-90 Gew-%) einen (kurzkettigen) mindestens zwei Hydroxylgruppen aufweisenden Polyether von Molekulargewicht 300-700, der durch Anlagerung von Propylenoxid und/oder Ethylenoxid an Starter wie Sorbit, Ethylenglykol, Trimethylolpropan, Glycerin, Pentarythrit und/oder Zucker hergestellt worden ist. Vorzugsweise hat er eine OH-Zahl von 300-600.

Die Polyolkomponente enthält ferner (zu 0,5-20 Gew.-%) ein aliphatisches, cycloaliphatisches oder aromatisches Polyamin vom Molekulargewicht 32-1000 als Vernetzer, z.B. Tetraethylenpentamin, Hexamethylendiamin oder Diethyltoluylendiamin.

Zusätzlich kann ein Hydrophobierungsmittel, vorzugsweise Rizinusöl, in Mengen von 0 bis 30 Gew.-% enthalten sein.

In der Polyolkomponente ist auch das (an sich bekannte) Treibmittel, vorzugsweise Wasser (in der Regel in einer Menge von 0,5-10 Gew.-%), enthalten.

Als Treibmittel kommen neben den vorzugsweise verwendeten Wasser, das bekanntlich durch Reaktion mit Isocyanaten $CO_2$ freisetzt, leichtflüchtige organische Substanzen in Frage, z.B. perhalogenierte und teilhalogenierte Kohlenwasserstoffe, die bei einem Druck von 1013 mbar innerhalb des Temperaturbereichs von -50°C bis +75°C, vorzugsweise von +10°C bis +35°C sieden, wie Trichlorfluormethan (R11), 1,1-Dichlor-2,2,2-trifluorethan (R123), 1,1-Dichlor-1-fluorethan (R141b), Dichlorfluormethan R11, 1-Chlor-1,1-difluor-ethan (R142b), 1,1,1,2-Tetrafluorethan (R134a) sowie aliphatische oder cycloaliphatische $C_3$-$C_6$-Kohlenwasserstoffe z.B. Propan, Butan, Pentan, Isopentan.

Schließlich enthält sie (in einer Menge von 0-30 Gew.-%) einen tert. Aminogruppen aufweisenden Polyether vom Molekulargewicht 200-700, der durch Anlagerung von Ethylenoxid und/oder Propylenoxid an z.B. Triethanolamin, Diisopropanolamin oder Ethylendiamin erhalten wurde. Vorzugsweise hat er eine OH-Zahl von 250-700.

In der Polyolkomponente befinden sich auch noch gegebenenfalls Verbindungen mit mindestens drei Hydroxylgruppen mit einem Molekulargewicht von 32 bis 299, die als Kettenverlängerungsmittel oder Vernetzungsmittel dienen. Beispiele hierfür werden in der DE-OS 28 32 253, Seiten 19-20, beschrieben.

Gegebenenfalls mitzuverwenden sind auch Hilfs- und Zusatzstoffe, wie Emulgatoren und Schaumstabilisatoren. Als Emulgatoren sind solche auf Basis alkoxylierter Fettsäuren und höherer Alkohole bevorzugt.

Als Schaumstabilisatoren kommen vor allem Polyethersiloxane, speziell wasserunlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Wasserlösliche Schaumstabilisatoren sind z.B. in den US-PS 28 34 748, 29 17 480 und 36 29 308 beschrieben.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide in der Polyolkomponetne mitenthalten sein können.

Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Erfindungsgemäß können auch die aus der Polyurethanchemie an sich bekannten Katalysatoren wie tert.-Amine und/oder metallorganische Verbindungen in der Polyolkomponente mit enthalten sein.

Nachdem das flüssige, zum Polyurethan-Hartschaumstoff führende Reaktionsgemisch auf das zu isolierende Rohr nach dem Rotationsgießverfahren aufgetragen wurde, wird - vorzugsweise in einem Arbeitsgang - die schon näher definierte, zu einem massiven Polyurethan führende flüssige Reaktionsmischung aufgebracht, vorteilhafterweise, bevor die Polyurethan-Hartschaumstoffschicht ihre Endfestigkeit erreicht hat, d.h. etwa 1-10 min nach deren Antrag wird vorzugsweise das die Deckschicht bildende Reaktionsgemisch aufgebracht.

Die Einzelkomponenten des zum massiven Polyurethan führenden Reaktionsgemischs sind an sich bekannt.

Als Hydrophobierungsmittel wird vorzugsweise Rizinusöl verwendet. Die hier in Frage kommenden Hilfs- und Zusatzmittel entsprechen im Prinzip den schon genannten Verbindungen.

Beispiele für den 2-4 gegenüber Isocyanaten aktive Wasserstoffatome aufweisenden Polyether vom Molekulargewicht 1000-6000, der sowohl in der Polyolkomponente als auch (in umgesetzter Form) in der Prepolymerkomponente des zum massiven Polyurethans führenden Reaktionsgemisch enthaltenden ist, sind z.B. Aminogruppen, Thiolgruppen oder Carboxylgruppen, vorzugsweise aber Hydroxylgruppen aufweisende Verbindungen, z.B. 2 bis 4 Hydroxylgruppen aufweisende Polyether, wie sie für die Herstellung von Polyurethanen an sich bekannt sind und wie sie z.B. in der DE-OS 28 32 253, Seiten 11-18, beschrieben werden. Dieser Polyether ist in einer Menge von 95 bis 30 Gew.-% im Polyolgemisch enthalten.

Hierzu zählen auch Dispersionen von Polymeren enthaltenden höhermolekularen Hydroxylverbindungen, die durch Umsetzung von Mono- und/oder Polyisocyanaten mit primäre un/oder sekundäre Aminogruppen aufweisenden Polyaminen und/oder Hydrazinen und/oder Hydraziden und/oder Alkanolaminen in einer 2 bis 4 primäre und/oder sekundäre Hydroxylgruppen aufweisenden Verbindung mit einem Molekulargewicht von 1000 bis 6000 hergestellt worden sind. Derartige Dispersionen von Polymeren enthaltenden höhermolekularen Hydroxylverbindungen sind z.B. aus DE-AS 25 19 004, DE-OS 25 50 796, DE-OS 25 50 797, DE-OS 25 50 960, DE-OS 25 50 833, DE-OS 25 50 862, DE-OS 26 38 759, DE-OS 26 39 254, US-PS 43 74 209, EP-A 00 79 115 und US-PS 43 81 351 bekannt.

Selbstverständlich können auch polymermodifizierte Polyole verwendet werden, die durch Pfropfung von Doppelbindungen enthaltenden Monomeren wie Styrol und/oder Acrylntril auf Polyole erhalten werden.

In Frage kommende aromatische Diamine vom Molekulargewicht 122-400 sind z.B. Toluylendiamin, 4,4'-Diaminodiphenylmethan, 3,5-Diethyltoluylendiamin-2,4 (DETDA).

Beispiele für aliphatische und cycloaliphatische Diamine vom Molekulargewicht 60-400 sind Ethylendiamin, Isophorondiamin, 1,4-Diamino-cyclohexan.

Beschreibung des erfindungsgemäßen Verfahrens:

Ein Rohr wird je nach Durchmesser auf einer entsprechenden Anlage mit definierter Drehzahl in Rotation versetzt. Je nach geforderter Dämmschichtdicke wird unter einem definierten Vorschub des Mischkopfes das Hartschaum bildende Reaktionsgemisch per Schlitzdüse aufgegossen. Für verschiedene Ausstoßmengen müssen verschiedene Düsengeometrien, vorzugsweise Schlitzdüsen verwendet werden. Hat der Hartschaum seine Dämmdicke erreicht, so startet im gleichen Arbeitsgang das Gießen der Deckschicht. Der Vorschub der beiden Mischköpfe für Hartschaum und Deckschicht kann mit gleichen oder differenzierten Geschwindigkeiten erfolgen, wenn das Rohr rotierend eingespannt ist.

Wird das rotierende Rohr in Richtung Längsachse bewegt, dann müssen die Mischköpfe im vorgegebenen Abstand fest positioniert werden.

Der Ausstoß des Reaktionsgemisches für Hartschaum und Deckschicht wird zweckmäßigerweise so eingestellt, daß sich für beide Mischköpfe gleiche Vorschubgeschwindigkeiten ergeben. Für das Gießen der Deckschicht werden ebenfalls entsprechende Düsengeometrien, vorzugsweise Schlitzdüsen, verwendet.

Ausführungsbeispiel:

| | | |
|---|---|---|
| Rohrdurchmesser | 620 | mm |
| Rohrdrehzahl | 23,8 | U/min |
| Ausstoß für Hartschaumgemisch | 5000 | g/min |
| Ausstoß für Deckschichtgemisch | 6400 | g/min |
| Vorschub für Hartschaum-mischkopf | 406 | mm/min |
| Vorschub für Deckschicht-mischkopf | 240 | mm/min |
| Dämmdicke | 80 | mm |
| Deckschicht-Dicke | 11 | mm |
| Mischkopfabstand | 1400 | mm |

Hartschaumrezeptur:

| | | |
|---|---|---|
| 45 | Gew.-Tle | Zucker gestarteter Polyether mit Propylenoxid OHZ 450, MG 350 |
| 45 | Gew.-Tle | Sorbit/Glycerin gestartete Polyether mit Propylenoxid OHZ 450, MG 570 |
| 5 | Gew.-Tle | Glycerin |
| 1,5 | Gew.-Tle | $H_2O$ |
| 1 | Gew.-Tle | Schaumstabilisator B 8423 (Fa. Goldschmidt) |
| 2,5 | Gew.-Tle | Tetraethylenpentamin |
| 1,3 | Gew.-Tle | Pentamethyldiethylentriamin |
| 160,0 | Gew.-Tle | rohes MDI (NCO-Gehalt 31,8 Gew.-%) Kennzahl 110 |

Rezeptur des mass. Polyurethans:

```
79        Gew.-Tle   Polyether (SAN-Pfropfpolymerisat),
                     MG 4500
19,5      Gew.-Tle   Diethyltoluylendiamin
1,5       Gew.-Tle   Hexamethylendiamin
_____

131,0     Gew.-Tle   MDI-Polyetherprepolymer (NCO-Gehalt:
                                        10,5 Gew.-%)


128       Gew.-Tle   Prepolymer auf 100 Teile Polyol
                     (Kennzahl 113)
```

Rezeptur Prepolymer:

41 % Isocyanatgemisch aus
  70 % 4,4'-MDI
  20 % 2,4'-MDI
  10 % MDI mit Funktionalität $\geqq 3$
59 % Polyether aus 1,2-Propylenglykol und Propylenoxid, MG 2000


## Patentansprüche

1.  Verfahren zur Isolierung von Rohren durch Auftragen von mindestens einer Isolier- und mindestens einer äußeren Deckschicht nach dem Rotationsgießverfahren, dadurch gekennzeichnet, daß als Isolierschicht ein Polyurethan-Hartschaumstoff, erhältlich durch Umsetzung eines

    I.
    a) aromatischen Polyisocyanats mit
    b) einer im Mittel mindestens 3 gegenüber Isocyanaten reaktive Wasserstoffatome aufweisenden Polyolkomponente, enthaltend
    1. einen mindestens 2 Hydroxylgruppen aufweisenden Polyether vom Molekulargewicht 300-700
    2. ein aliphatisches, cycloaliphatisches oder aromatisches Polyamin vom Molekulargewicht 32-1000 als Vernetzer und
    3. ein Treibmittel sowie
    4. gegebenenfalls einen tertiären Aminogruppen aufweisenden Polyether von Molekulargewicht 200-700 und
    5. gegebenenfalls eine mindestens 3 Hydroxylgruppen aufweisende Verbindung vom Molekulargewicht 62-299 als Kettenverlängerungs- oder Vernetzungsmittel und
    6. gegebenenfalls Hilfs- und Zusatzstoffe,
    und als Deckschicht ein massives Polyurethan, erhältlich durch Umsetzung eines

    II.
    a) endständige NCO-Gruppen aufweisenden Prepolymers mit einem NCO-Gehalt von 5-20 Gew.-%, das durch Reaktion von
    1. 4,4'-Diphenylmethandiisocyanat, gegebebenenfalls im Gemisch mit 2,4'- und 2,2'-Isomeren und 0-30 Gew.-% höherfunktionellen Anteilen, mit einem
    2. 2 - 4 OH-Gruppen aufweisenden Polyether vom Molekulargewicht 1000 - 6000, dem gegebenenfalls bis zu 30 Gew.-% Hydrophobierungsmittel zugesetzt wurde, erhältlich ist,
    mit
    b) einer Polyolkomponente, enthaltend
    1. einen 2 - 4 gegenüber Isocyanaten aktive Wasserstoffatome aufweisenden Polyether vom Molekulargewicht 1000 - 6000,

2. 5 - 35 Gew.-% eines aromatischen Diamins vom Molekulargewicht 122-400,

3. 0 - 5 Gew.-% eines aliphatischen oder cycloaliphatischen Diamins vom Molekulargewicht 60-400,

4. 0 - 30 Gew.-% eines Hydrophobierungsmittels und

5. gegebenenfalls Hilfs- und Zusatzstoffe

verwendet werden, wobei der Auftrag der Polyurethan-Hartschaumschicht und der äußeren Deckschicht aus massivem Polyurethan in einem Arbeitsgang erfolgt.

2. Verfahren gemäß Anspruch 1, dadurch gekennzeichnet, daß als aromatisches Polyisocyanat Ia ein Gemisch aus Diphenylmethandiisocyanat und Polyphenyl-polyisocyanaten verwendet wird.

3. Verfahren gemäß Anspruch 1 und 2, dadurch gekennzeichnet, daß Wasser als Treibmittel verwendet wird.

4. Verfahren gemäß Anspruch 1 bis 3, dadurch gekennzeichnet, daß die Polyolkomponente Ib noch zusätzlich ein Hydrophobierungsmittel enthält.

5. Verfahren gemäß Anspruch 1 bis 4, dadurch gekennzeichnet, daß die Polyolkomponente IIb als aromatisches Diamin Diethyltoluylen-diamin enthält.

6. Verfahren gemäß Anspruch 1-5, dadurch gekennzeichnet, daß der Auftrag der äußeren Deckschicht aus massivem Polyurethan vor Erreichen der Endfestigkeit der Polyurethan-Hartschaumschicht erfolgt.

7. Verfahren gemäß Anspruch 1-6, dadurch gekennzeichnet, daß der Auftrag der Polyurethan-Hartschaumschicht und der äußeren Schicht aus massivem Polyurethan mit Hilfe von Mischköpfen und Gießdüsen erfolgt, wobei der Mischkopfvorschub entweder in definiertem Abstand der Mischköpfe parallel zur Rotationsachse erfolgt oder das Rohr in achsialer Richtung unter fest positionierten Mischköpfen mit definiertem Vorschub bewegt wird.

**Claims**

1. A process for insulating pipes by application of at least one insulating layer and at least one surface layer by rotational molding, characterized in that a rigid polyurethane foam obtainable by reaction of

   I.

   a) an aromatic polyisocyanate with

   b) a polyol component bearing on average at least 3 isocyanate-reactive hydrogen atoms and containing

   1. a polyether containing at least two hydroxyl groups and having a molecular weight of 300 to 700

   2. an aliphatic, cycloaliphatic or aromatic polyamine having a molecular weight of 32 to 1,000 as crosslinking agent and

   3. a blowing agent and

   4. optionally a polyether containing tertiary amino groups and having a molecular weight of 200 to 700 and

   5. optionally a compound containing at least three hydroxyl groups and having a molecular weight of 62 to 299 as chain-extending or crosslinking agent and

   6. optionally auxiliaries and additives,

   is used as the insulating layer and a solid polyurethane obtainable by reaction of

   II.

   a) an NCO-terminated prepolymer having an NCO content of 5 to 20% by weight obtainable by reaction of

   1. 4,4'-diphenyl methane diisocyanate, optionally in admixture with 2,4'- and 2,2'-isomers and 0 to 30% by weight of components of higher functionality with a

   2. a polyether containing 2 to 4 OH groups and having a molecular weight of 1,000 to 6,000 to which up to 30% by weight of a hydrophobicizing agent, preferably castor oil, has optionally been added

   with

   b) a polyol component containing

   1. a polyether containing 2 to 4 isocyanate-active hydrogen atoms and having a molecular weight of 1,000 to 6,000,

2. 5 to 35% by weight of an aromatic diamine having a molecular weight of 122 to 400,

3. 0 to 5% by weight of an aliphatic or cycloaliphatic diamine having a molecular weight of 60 to 400,

4. 0 to 30% by weight of a hydrophobicizing agent and

5. optionally auxiliaries and additives is used as the outer surface layer, the rigid polyurethane foam layer and the outer layer of solid polyurethane being applied in a single operation.

2. A process as claimed in claim 1, characterized in that a mixture of diphenyl methane diisocyanate and polyphenyl polyisocyanates is used as the aromatic polyisocyanate Ia.

3. A process as claimed in claims 1 and 2, characterized in that water is used as the blowing agent.

4. A process as claimed in claims 1 to 3, characterized in that the polyol component Ib additionally contains a hydrophobicizing agent.

5. A process as claimed in claims 1 to 4, characterized the polyol component IIb contains diethyl tolylenediamine as the aromatic diamine.

6. A process as claimed in claims 1 to 5, characterized in that the outer surface layer of solid polyurethane is applied before the rigid polyurethane foam layer develops its final strength.

7. A process as claimed in claims 1 to 6, characterized in that the rigid polyurethane foam layer and the other layer of solid polyurethane are applied by means of mixing heads and casting nozzles, either the mixing heads being advanced at defined intervals parallel to the axis of rotation or the pipe being axially advanced at a defined speed under fixedly positioned mixing heads.

**Revendications**

1. Procédé pour isoler des tubes par application d'au moins une couche d'isolation et d'au moins une couche externe de protection conformément au procédé de coulée par rotation, caractérisé en ce que, comme couche d'isolation, on utilise une mousse dure de polyuréthanne que l'on obtient par la mise en réaction

I.

    a) d'un polyisocyanate aromatique avec

    b) un composant de polyol présentant en moyenne au moins 3 atomes d'hydrogène réactifs vis-à-vis d'isocyanates, contenant

        1. un polyéther présentant au moins 2 groupes hydroxyle, d'un poids moléculaire de 300-700,

        2. une polyamine aliphatique, cycloaliphatique ou aromatique d'un poids moléculaire de 32-1000, comme agent de réticulation, et

        3. un agent moussant, ainsi que

        4. éventuellement un polyéther présentant des groupes amino tertiaires, d'un poids moléculaire de 200-700, et

        5. éventuellement un composé présentant au moins 3 groupes hydroxyle, d'un poids moléculaire de 62-299, comme agent d'allongement de chaînes ou comme agent de réticulation, et

        6. éventuellement des adjuvants et des additifs, comme couche de protection, un polyuréthanne en masse que l'on obtient par la mise en réaction

II.

    a) d'un prépolymère présentant des groupes NCO terminaux, possédant une teneur NCO de 5-20% en poids, que l'on obtient par mise en réaction

        1. du 4,4'-diphénylméthane-diisocyanate, éventuellement en mélange avec des isomères 2,4' et 2,2' et avec des fractions à fonctionnalité supérieure à concurrence de 0-30% en poids, avec

        2. un polyéther présentant 2-4 groupes OH, d'un poids moléculaire de 1000-6000, auquel on a ajouté éventuellement des agents rendant hydrophobe à concurrence de 30% en poids, avec

    b) un composant de polyol contenant

        1. un polyéther présentant 2-4 atomes d'hydrogène réactifs vis-à-vis d'isocyanates, d'un poids moléculaire de 1000-6000,

        2. de 5 à 35% en poids d'une diamine aromatique d'un poids moléculaire de 122-400,

3. de 0 à 5% en poids d'une diamine aliphatique ou cycloaliphatique d'un poids moléculaire de 60-400,

4. de 0 à 30% en poids d'un agent rendant hydrophobe, et

5. éventuellement des adjuvants et des additifs,

dans lequel, l'application de la couche de mousse dure de polyuréthanne et de la couche externe de protection constituée par du polyuréthanne en masse ont lieu en une étape opératoire unique.

2. Procédé selon la revendication 1, caractérisé en ce que, comme polyisocyanate aromatique Ia, on utilise un mélange du diphénylméthanediisocyanate et de polyphénylpolyisocyanates.

3. Procédé selon les revendications 1 et 2, caractérisé en ce que, comme agent moussant, on utilise de l'eau.

4. Procédé selon les revendications 1 à 3, caractérisé en ce que le composant de polyol Ib contient en outre un agent rendant hydrophobe.

5. Procédé selon les revendications 1 à 4, caractérisé en ce que le composant de polyol IIb contient, comme diamine aromatique, la diéthyltoluylènediamine.

6. Procédé selon les revendications 1 à 5, caractérisé en ce que l'application de la couche externe de protection constituée par du polyuréthanne en masse a lieu avant d'atteindre la dureté finale de la couche de mousse dure de polyuréthanne.

7. Procédé selon les revendications 1 à 6, caractérisé en ce que l'application de la couche de mousse dure de polyuréthanne et de la couche externe constituée par du polyuréthanne en masse a lieu à l'aide de têtes de mélange et de buses de coulée, dans lequel, soit on procède à l'avance des têtes de mélange à distance définie des têtes de mélange parallèlement à l'axe de rotation, soit on déplace le tube en direction axiale, les têtes de mélanges étant positionnées à demeure et présentant une avance définie.